# EUROPÄISCHE PATENTSCHRIFT

(11) **EP 1 410 736 B1**
(45) Veröffentlichungstag und Bekanntmachung des Hinweises auf die Patenterteilung: **02.03.2005**
(21) Anmeldenummer: 03021978.6
(22) Anmeldetag: 30.09.2003
(51) Int. Cl.: A47C 1/03, A47C 7/40, F16C 29/02

(54) **Linear-Schiebeführung, insbesondere für zueinander verschiebbare Komponenten von Bürostühlen**
Linear slide guide, especially for relatively sliding components used in the office chairs
Guide à glissière linéaire, notamment pour des composants de chaises de bureau coulissant l'un par rapport à l'autre

(30) Priorität: 15.10.2002 DE 10247959
(43) Veröffentlichungstag der Anmeldung: 21.04.2004
(73) Patentinhaber: Bock 1 GmbH & Co., 92353 Postbauer-Heng (DE)
(72) Erfinder: Bock, Hermann, 90602 Pyrbaum (DE)
(74) Vertreter: Hübner, Gerd, Dipl.-Phys.

(56) Entgegenhaltungen:
- DE-C- 355 329
- DE-C- 807 753

## Beschreibung

Die Erfindung betrifft eine Linear-Schiebeführung insbesondere für zueinander verschiebbare Komponenten von Bürostühlen mit den im Oberbegriff des Patentanspruches 1 angegebenen Merkmalen.

Zum Hintergrund der Erfindung ist festzuhalten, dass moderne Bürostühle mit einer Vielzahl von Verstellmöglichkeiten versehen sind, wie beispielsweise der Rückenlehnenhöhe, der Sitztiefe, der Armlehnenhöhe, der Längsposition der Armlehnen usw. Die hierfür verwendeten Linear-Schiebeführungen weisen eine Längsführungsschiene mit in Schieberichtung verlaufenden Führungsflanken auf, in der ein schlittenartiger Lagerblock für das zu verstellende Teil verschiebbar geführt ist. Der Lagerblock ist dabei mit parallel zu den Führungsflanken der Längsführungsschiene verlaufenden Gegenflanken versehen.

Ein Problem bei solchen Linear-Führungen liegt darin, dass einerseits die Längsführungsschiene und der darin laufende Lagerblock ein gewisses Spiel haben müssen, damit eine leichtgängige Verschiebung möglich wird. Dieses Spiel führt andererseits wiederum zu einem Freiheitsgrad innerhalb der Schiebeführung, was zu einem Wackeln des verschiebbaren Teils führen kann. Dies führt nicht nur zu einem erhöhten Verschleiß an den verschiebbaren Teilen, sondern wird von den Nutzern solcher Bürostühle als qualitativ minderwertig empfunden. Verstellbare Teile sollen demgegenüber während der Benutzung des Stuhles sauber und stabil sitzen und während der Verschiebebewegung einen "satten", geschmeidigen Lauf zeigen.

Zur Behebung der vorstehend erörterten Probleme ist im Stand der Technik bereits versucht worden, durch warzenförmige Noppen an den Flanken der beteiligten Komponenten der Linear-Schiebeführung eine Art Spiel- oder Toleranzausgleich zu schaffen. Diese Noppen verursachen jedoch einen Punktkontakt mit der von ihr beaufschlagten Flanke, was insbesondere bei häufiger Verstellung zu einem schnellen Verschleiß führen kann.

Der Erfindung liegt die Aufgabe zu Grunde, eine Linear-Schiebeführung der gattungsgemäßen Art so weiterzubilden, dass eine saubere, toleranzkompensierte, verschleißarme Führung unter geringem konstruktivem Aufwand erzielt wird.

Diese Aufgabe wird durch die im Kennzeichnungsteil des Anspruches 1 angegebene Spielausgleichs-Federanordnung zwischen Längsführungsschiene und Lagerblock gelöst. Demgemäß weist eine solche Spielausgleichs-Federanordnung in ihrer Grundkonfiguration eine im Wesentlichen zylindrische, in der Längsführungsschiene oder im Lagerblock angelegte Aufnahme auf, die mit ihrer Zylinderachse parallel zur jeweiligen Flanke im Randbereich von Längsführungsschiene oder Lagerblock angeordnet und deren lichter Querschnitt über einen Spalt zur jeweiligen Flanke hin seitlich offen ist. Als weitere Komponente der Spielausgleichs-Federanordnung ist eine elastisch deformierbare Federhülse vorgesehen, die achsparallel in die Aufnahme derart eingesetzt ist, dass sie über den Spalt die gegenüber liegende Flanke von Lagerbock oder Längsführungsschiene federnd beaufschlagt.

Aufgrund dieser Konstruktion werden die an der Schiebeführung beteiligten Komponenten aufgrund der beaufschlagenden Anlage der Federhülse an der gegenüber liegenden Flanke des anderen Bauteils quasi spielfrei gestellt, sodass ein loses Wackeln der beiden Bauteile zueinander vermieden wird. Insbesondere wenn die Federhülse aus einem glatten, gleitfähigen Kunststoff besteht, ist eine leichtgängige, dabei jedoch "satt" wirkende Verschiebung der beiden Bauteile zueinander möglich. Schließlich wirkt die Federhülse auch als Toleranzausgleich bzw. erlaubt sie eine gedämpfte Auslenkung der beiden an der Schiebeführung beteiligten Komponenten zueinander, wenn zwischen diesen beiden ein höheres u.U. gewolltes Toleranzmaß gegeben ist.

Als weiterer Vorteil ist darauf hinzuweisen, dass aufgrund der Form der Federhülse und der Anlage an die gegenüber liegende Flanke kein Punktsondem ein Linienkontakt hervorgerufen wird. Damit ist ein geringerer Verschleiß zu verzeichnen wie bei einem Punktkontakt.

Die Flexibilität der Federhülse und damit das Spiel- und Toleranzausgleichsverhalten der Linear-Schiebeführung lässt sich durch die Auslegung von Dimensionierung, Formgebung der Aufnahme und Materialeigenschaften der Federhülse in breiten Bereichen steuern, z.B. auch durch eine Schlitzung der Hülse. Im Übrigen kann die Federhülse auch durch entsprechend elastisches Vollmaterial realisiert werden und damit die Form einer Walze haben.

Schließlich ist festzuhalten, dass für die Montage der Spielausgleichs-Federanordnung lediglich die elastisch deformierbare Federhülse in die entsprechende Aufnahme einzusetzen ist. Dort kann sie durch ihre eigene Elastizität und ein Einsetzen unter radialer Spannung selbsthaltend montiert werden, sodass nach der Bestückung etwa einer Vielzahl von Spielausgleichs-Federanordnungen an einem Lagerbock lediglich dieser und die Längsführungsschiene ineinander in Eingriff gebracht werden müssen.

Gemäß einer besonders hervorzuhebenden Weiterentwicklung der erfindungsgemäßen Linear-Schiebeführung ist es vorgesehen, in der von der oder den Federhülsen beaufschlagten Flanke Rastvertiefungen für die Federhülsen vorzusehen. Dadurch haben die Spielausgleichs-Federanordnungen neben ihrem eigentlichen Zweck auch noch die Funktion einer Rasterung bei der Verschiebung der beiden beteiligten Komponenten zueinander.

Weitere bevorzugte Ausführungsformen, Einzelheiten und Vorteile der Erfindung ergeben sich aus den Unteransprüchen und der nachfolgenden Beschreibung, in der ein Ausführungsbeispiel anhand der beigefügten Zeichnungen näher erläutert wird. Es zeigen:
- Fig. 1: eine stirnseitige Ansicht einer Linear-Schiebeführung,
- Fig. 2: eine Ansicht der Linear-Schiebeführung aus Pfeilrichtung II gemäß Fig. 1,
- Fig. 3: eine Ansicht der Linear-Schiebeführung aus Pfeilrichtung III gemäß Fig. 1 bei entferntem Basisträger,
- Fig. 4: einen Längsschnitt der Linear-Schiebeführung gemäß Schnittlinie A-A nach Fig. 3,
- Fig. 5 und 6: Querschnitte der Linear-Schiebeführung gemäß den Schnittlinien B-B bzw. C-C gemäß Fig. 4,
- Fig. 7: eine vergrößerte Detailansicht der Linear-Schiebeführung gemäß Einzelheit Z1 nach Fig. 3,
- Fig. 8: eine Ansicht analog Fig. 3 einer Linear-Schiebeführung in einer alternativen Ausgestaltung, und
- Fig. 9: eine vergrößerte Detailansicht der Linear-Schiebeführung gemäß Einzelheit Z2 nach Fig. 8.

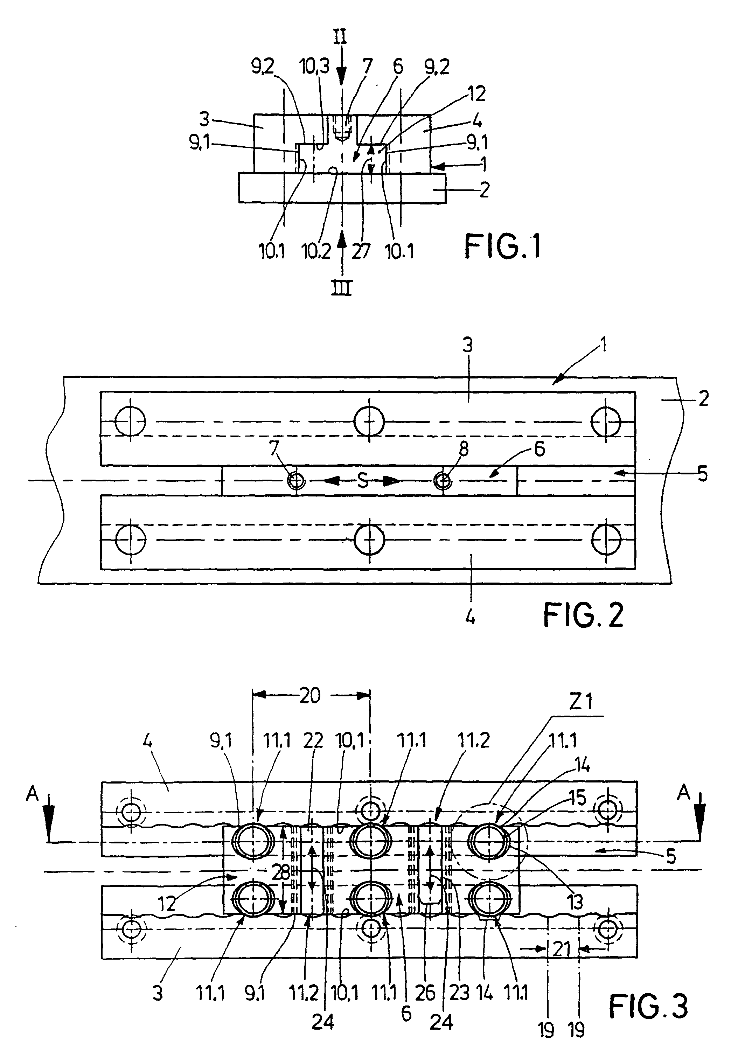

Wie aus Fig. 1 deutlich wird, weist eine Linear-Schiebeführung eine Längsführungsschiene 1 auf, die aus einem Basisträger 2 in Form eines Flacheisens und zwei darauf geschraubten, parallelen Winkel-Profileisen 3, 4 besteht. Letztere sind so angeordnet, dass Basisträger 2 und Winkel-Profileisen 3, 4 einen im Querschnitt T-förmigen Führungskanal 5 bilden, in dem ein einen entsprechenden Querschnitt aufweisender Lagerblock 6 in Schieberichtung S verschiebbar geführt ist.

Eine derartige Linear-Schiebeführung kann beispielsweise an einem Bürostuhl vorgesehen sein, wobei der Basisträger 2 starr am Sitzträger des Stuhles montiert und der Lagerblock 6 mit einem (nicht gezeigten) Rückenlehnenträger über entsprechende Schraublöcher 7, 8 (Fig. 1 und 2) verschraubt sein kann. Eine kinematische Umkehr von Führungsschiene 1 und Lagerblock 6 dahingehend, dass letzterer stuhlfest angeordnet und ein verstellbares Teil an der Längsführungsschiene angebracht ist, ist ebenfalls realisierbar.

Die Längsführung des Lagerblocks 6 in der Längsführungsschiene 1 erfolgt durch in Schieberichtung S verlaufende Führungsflanken 9 an der Längsführungsschiene 1 und entsprechend parallel dazu verlaufenden Gegenflanken 10 am Lagerblock 6. Wie nun in den Zeichnungen nicht explizit darstellbar ist, sind die Längsführungsschiene 1 und der Lagerblock 6 derart zueinander dimensioniert, dass die Führungsflanken 9 und Gegenflanken 10 ein gewisses Spiel zueinander aufweisen, damit bei den zwangsweise gegebenen Fertigungstoleranzen eine Verschiebbarkeit der beiden Komponenten zueinander gewährleistet ist.

Um ein Wackeln von Längsführungsschiene 1 und Lagerblock 6 zueinander zu unterbinden und einen Toleranzausgleich zu schaffen, sind am Lagerblock 6 als solche bezeichnete Spielausgleichs-Federanordnungen 11.1 vorgesehen, von denen jeweils drei entlang der seitlichen Gegenflanken 10.1 des Lagerblockes 6 aneinandergereiht sind. Zwischen diesen Paaren von horizontal wirkenden Spielausgleichs-Federanordnungen 11.1 ist jeweils eine vertikal wirkende Spielausgleichs-Federanordnung 11.2 vorgesehen.

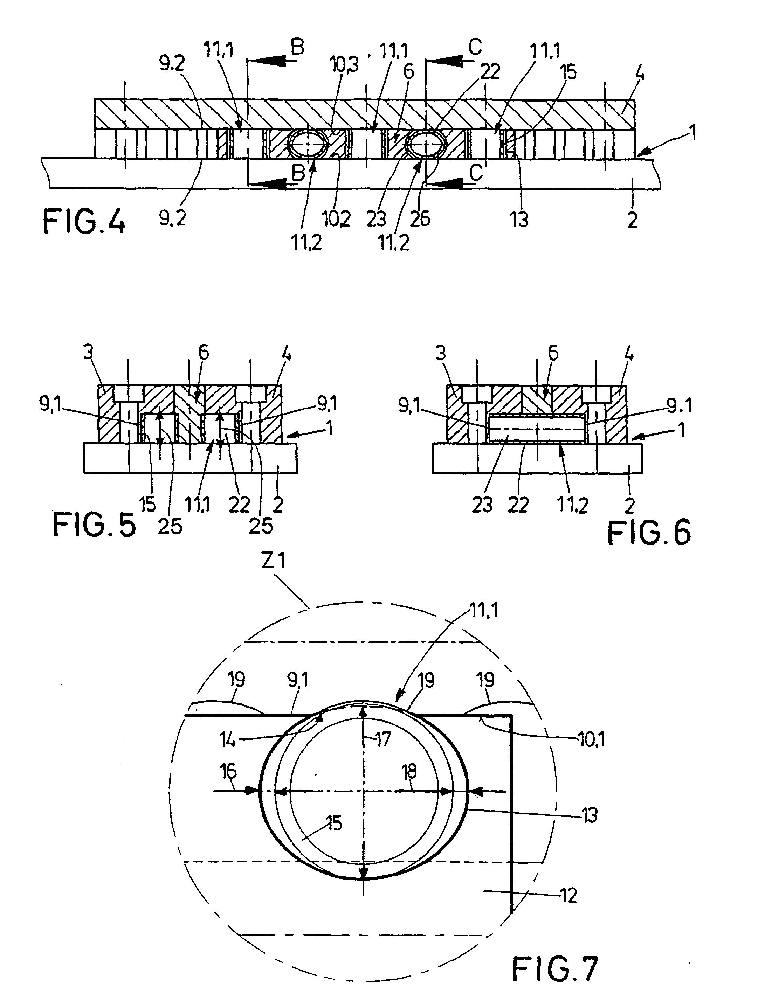

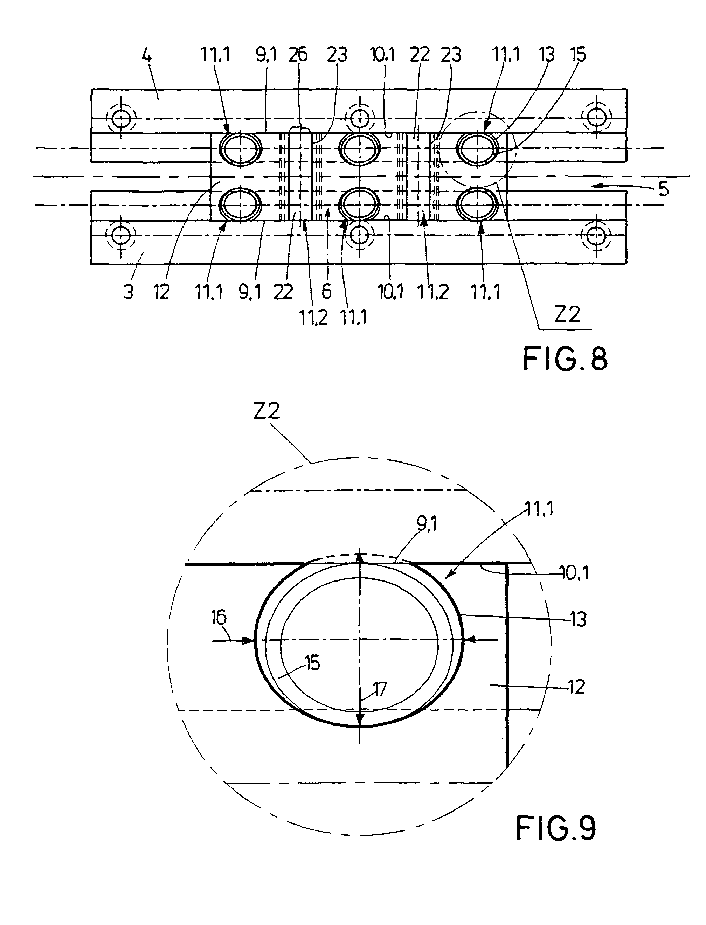

Die erstgenannten Federanordnungen 11.1 weisen eine in den seitlichen T-Stegen 12 angelegte, an ihren Längsenden offene Aufnahme 13 auf, die im Wesentlichen zylindrisch mit einem - wie in den Fig. 7 und 9 erkennbar - leicht ovalisierten Querschnitt geformt ist. Die Aufnahme 13 sitzt dabei so in den T-Stegen 12, dass ihre Mantelkontur seitlich über die Gegenflanken 10.1 jeweils hinausführt. Dadurch ist der lichte Querschnitt der Aufnahmen 13 über einen Spalt 14 zur jeweiligen Gegenflanke 10.1 hin seitlich offen.

In jede Aufnahme 13 ist eine elastisch deformierbare Federhülse 15 in Form eines kurzen Rohrstückes, beispielsweise aus PTFE, eingesetzt. Deren Länge entspricht der Dicke 27 des T-Steges 12. Der Außendurchmesser der Federhülsen 15 ist so bemessen, dass sie unter Radialspannung in die jeweilige Aufnahme 13 eingesetzt sind. Aufgrund der Ovalisierung kann dies beispielsweise so erreicht werden, dass die lange Halbachse 16 des Aufnahmequerschnitts größer und die kurze Halbachse 17 des Aufnahmequerschnitts kleiner als der Außendurchmesser 18 der undeformierten Federhülse 15 bemessen sind. Dadurch wird die Federhülse 15 in der Aufnahme 13 so festgehalten, dass sie mit einem Teilumfang durch den Spalt 14 hindurchtritt und die gegenüber liegende Führungsflanke 9.1 der Längsführungsschiene 1 beaufschlagt. Bei der Ausführungsform gemäß den Fig. 1 bis 7 ist dabei in dieser Führungsflanke 9.1 eine Reihe von teilzylindrischen Rastvertiefungen 19 so eingebracht, dass der Abstand 20 der Aufnahmen 13 bzw. Federhülsen 15 einem ganzzahligen Vielfachen des Abstandes 21 der Rastvertiefungen 19 entspricht. Insoweit sind die relativen Längspositionen von Längsführungsschiene 1 und Lagerblock 6 mit einem gleichmäßigen Rasterabstand gerastert, der dem Abstand 21 der Rastvertiefungen 19 entspricht.

Die Spielausgleichs-Federanordnungen 11.2 sind wiederum durch Federhülsen 22 gebildet, die in Aufnahmen 23 eingesetzt sind. Letztere verlaufen quer zur Schieberichtung S parallel zur Breitenrichtung des T-Steges 12 und weisen somit eine Orientierungsrichtung 24 (Fig. 3) auf, die rechtwinklig zur Schieberichtung S und rechtwinklig zur Orientierungsrichtung 25 (Fig. 5) der Aufnahmen 13 bzw. Federhülsen 15 liegt. Insoweit übernehmen die Spielausgleichs-Federanordnungen 11.2 den Spiel- und Toleranzausgleich in Vertikalrichtung. Die Aufnahmen 23 und Federhülsen 22 haben eine Länge, die der Breite 28 des T-Steges entspricht. Die Aufnahmen 23 selbst sind wiederum im Wesentlichen zylindrisch mit leicht ovalisiertem Querschnitt und so angelegt, dass ihre Mantelkontur beiderseits über die entsprechenden Gegenflanken 10.2 zum Basisträger 2 und 10.3 zu der zum Basisträger 2 hinweisenden Führungsflanke 9.2 der Winkelprofileisen 3, 4 hinausreicht. Dadurch sind beiderseits des T-Steges 12 wiederum Spalte 26 gebildet, über die die Federhülse 22 aus den Aufnahmen 23 hinausragt und die entsprechenden Führungsflanken 9.2 und 9.3 der Längsführungsschiene 1 beaufschlagt. In diesen Führungsflanken sind keine Rastvertiefungen vorgesehen.

Bei der in Fig. 8 und 9 gezeigten Ausführungsform der Linear-Schiebeführung sind gegenüber der ersten Ausführungsform lediglich die Rastvertiefungen 19 in den Führungsflanken 9.1 der Längsführungsschiene 1 weggelassen. Dadurch wird - wie in Fig. 9 erkennbar ist - die Federhülse 15 stärker in Richtung der langen Halbachse 16 der Aufnahme 13 deformiert und in Richtung der kurzen Halbachse 17 zusammengedrückt. Ansonsten beaufschlagen die Federhülsen 15 die Führungsflanken 9.1 der Längsführungsschiene 1 quer zur Schieberichtung S und gleiten bei einem Verschieben satt an diesen Führungsflanken 9.1 entlang. Dadurch wird ein unkontrolliertes, leichtgängiges Wackeln vermieden.

## Patentansprüche

1. Linear-Schiebeführung insbesondere für zueinander verschiebbare Komponenten von Bürostühlen umfassend
- eine Längsführungsschiene (1) mit in Schieberichtung (S) verlaufenden Führungsflanken (9), und
- einen in der Längsführungsschiene (1) sitzenden Lagerblock (6) mit parallel zu den Führungsflanken (9) verlaufenden Gegenflanken (10), wobei Längsführungsschiene (1) und Lagerblock (6) in Schieberichtung (S) relativ zueinander verschiebbar sind,
**gekennzeichnet durch**
- mindestens eine Spielausgleichs-Federanordnung (11) zwischen Längsführungsschiene (1) und Lagerblock (6), die jeweils gebildet ist **durch**
- eine im wesentlichen zylindrische, in der Längsführungsschiene (1) oder im Lagerblock (6) angelegte Aufnahme (16, 23),
= die mit ihrer Zylinderachse parallel zur jeweiligen Flanke (10) im Randbereich von Längsführungsschiene (1) oder Lagerblock (6) angeordnet ist, und
= deren lichter Querschnitt über einen Spalt (14, 26) zur jeweiligen Flanke (10) hin seitlich offen ist, sowie
- eine elastisch deformierbare Federhülse (15, 22), die achsparallel in die Aufnahme (13, 23) derart eingesetzt ist, dass sie über den Spalt (14, 26) die gegenüberliegenden Flanke (9) von Lagerbock (6) oder Längsführungsschiene (1) beaufschlagt.

2. Linear-Schiebeführung nach Anspruch 1, **dadurch gekennzeichnet, dass** die Aufnahme (13, 23) im Querschnitt leicht oval ausgebildet ist, wobei die lange Halbachse (16) größer und die kurze Halbachse (17) kleiner als der Außendurchmesser (18) der Federhülse (15, 22) bemessen sind.

3. Linear-Schiebeführung nach Anspruch 1 oder 2, **dadurch gekennzeichnet, dass** die Federhülse (15, 22) unter Radialspannung in die Aufnahme (13, 23) eingesetzt ist.

4. Linear-Schiebeführung nach einem der vorgenannten Ansprüche, **dadurch gekennzeichnet, dass** die Aufnahme (13, 23) in einem Schenkel (12) des Lagerblockes (6) angeordnet und zu ihren beiden Längsenden hin offen ist.

5. Linear-Schiebeführung nach Anspruch 4, **dadurch gekennzeichnet, dass** die Dicke (27) bzw. Breite (28) des Schenkels (12) der Länge der Federhülse (15 bzw. 22) entspricht.

6. Linear-Schiebeführung nach einem der vorgenannten Ansprüche, **dadurch gekennzeichnet, dass** die Aufnahme (23) mit ihrem lichten Querschnitt über zwei gegenüberliegende Spalte (26) zu einander abgewandten Flanken (10.2, 10.3) des Lagerblockes (6) seitlich offen ist, wobei die Federhülse (22) die beiden jeweiligen Führungsflanken (10.2, 10.3) der Längsführungsschiene (1) beaufschlagt.

7. Linear-Schiebeführung nach einem der vorgenannten Ansprüche, **dadurch gekennzeichnet, dass** eine Vielzahl von Aufnahmen (13, 23) und darin eingesetzten Federhülsen (15, 22) an einem Lagerblock (6) mit ihren Längsachsen jeweils rechtwinklig zur Schieberichtung (S) und in zwei unterschiedlichen, zueinander senkrechten Orientierungsrichtungen (24, 25) angeordnet sind.

8. Linear-Schiebeführung nach einem der vorgenannten Ansprüche, **dadurch gekennzeichnet, dass** die von der Federhülse (15) beaufschlagte Flanke (9) von Längsführungsschiene (1) oder Lagerbock (6) mit mindestens einer Rastvertiefung (19) zum Eingriff der Federhülse (15) versehen ist.

9. Linear-Schiebeführung nach Anspruch 8, **dadurch gekennzeichnet, dass** eine Vielzahl von Rastvertiefungen (19) in vorzugsweise gleichmäßigen Rasterabständen (21) vorgesehen ist.

10. Linear-Schiebeführung nach einem der vorgenannten Ansprüche, **dadurch gekennzeichnet, dass** die Federhülse aus elastischem Vollmaterial als Federwalze ausgebildet ist.

11. Bürostuhl mit zwei zueinander linear verschiebbaren Komponenten, wobei eine Linear-Schiebeführung nach einem der vorgenannten Ansprüche zwischen den beiden Komponenten vorgesehen ist.

## Claims

1. A linear sliding guide, in particular for inter-adjustable components of office chairs, comprising
- a longitudinal guide rail (1) with guide flanks (9) which extend in a direction of sliding (S); and
- a bearing block (6) which lodges in the longitudinal guide rail (1) and has counterpart flanks (10) that are parallel to the guide flanks (9), with the longitudinal guide rail (1) and the bearing block (6) being inter-adjustable in the direction of sliding (S);
**characterized by**
- at least one compensation-for-play spring assembly (11) between the longitudinal guide rail (1) and the bearing block (6), the spring assembly (11) being comprised of
- a substantially cylindrical receptacle (16, 23), which lodges in the longitudinal guide rail (1) or in the bearing block (6), and
-- which is disposed in a marginal area of the longitudinal guide rail (1) or bearing block (6) with its cylinder axis being parallel to the respective flank (10), and
-- the clear cross section of which is laterally open by a gap (14, 26) towards the respective flank (10); and
- an elastically deformable spring bushing (15, 22) which is inserted axially parallel in the receptacle (13, 23) such that it acts via the gap (14, 26) on the opposite flank (9) of the bearing block (6) or longitudinal guide rail (1).

2. A linear sliding guide according to claim 1, **characterized in that** the receptacle (13, 23) is slight oval in cross-sectional shape, with the long semiaxis (16) exceeding, and the short semiaxis (17) being less than, the outside diameter (18) of the spring bushing (15, 22).

3. A linear sliding guide according to claim 1 or 2, **characterized in that** the spring bushing (15, 22) is inserted by radial crush in the receptacle (13, 23).

4. A linear sliding guide according to one of the preceding claims, **characterized in that** the receptacle (13, 23) is disposed in a rib (12) of the bearing block (6) and is open towards both of its longitudinal ends.

5. A linear sliding guide according to claim 4, **characterized in that** the thickness (27) and width (28), respectively, of the rib (12) corresponds to the length of the spring bushing (15 and 22, respectively).

6. A linear sliding guide according to one of the preceding claims, **characterized in that** the receptacle (23), by its clear cross section, is laterally open by two opposite gaps (26) towards flanks (10.2, 10.3), turned away from each other, of the bearing block (6), with the spring bushing (22) acting on the two respective guide flanks (10.2, 10.3) of the longitudinal guide rail (1).

7. A linear sliding guide according to one of the preceding claims, **characterized in that** a multiplicity of receptacles (13, 23) and spring bushings (15, 22) that are inserted therein are disposed on a bearing block (6) with their respective longitudinal axes at right angles to the direction of sliding (S) and in two different directions of orientation (24, 25) that are perpendicular to each other.

8. A linear sliding guide according to one of the preceding claims, **characterized in that** the flank (9), actuated by the spring bushing (15), of the longitudinal sliding rail (1) or bearing block (6) is provided with at least one locking depression (19) for the spring bushing (15) to engage with.

9. A linear sliding guide according to claim 8, **characterized in that** a multiplicity of locking depressions (19) is provided at a preferably regular spacing (21).

10. A linear sliding guide according to one of the preceding claims, **characterized in that** the spring bushing is a spring roll of elastic solid material.

11. A office chair with two linearly inter-adjustable components, wherein a linear sliding guide according to one of the preceding claims is provided between the two components.

## Revendications

1. Guide à glissière linéaire, notamment pour des composants de chaises de bureau coulissant l'un par rapport à l'autre, comprenant :
- un rail de guidage longitudinal (1) avec des flancs de guidage (9) s'étendant dans la direction de la glissière (S) ; et
- un bloc de palier (6) reposant dans le rail de guidage longitudinal (1) avec des flancs conjugués (10) s'étendant parallèlement aux flancs de guidage (9), le rail de guidage longitudinal (1) et le bloc de palier (6) pouvant coulisser relativement l'un à l'autre dans la direction de la glissière (S) ;
**caractérisé par** :
- au moins un agencement d'amortisseur de compensation de jeu (11) entre le rail de guidage longitudinal (1) et le bloc de palier (6), qui est formé à chaque fois par :
- un logement (16, 23) essentiellement cylindrique pratiqué dans le rail de guidage longitudinal (1) ou dans le bloc de palier (6) ;
- qui est agencé avec son axe de cylindre parallèle au flanc respectif (10) dans la zone du bord du rail de guidage longitudinal (1) ou du bloc de palier (6) ; et
- dont la section intérieure est ouverte latéralement en direction du flanc respectif (10) par le biais d'une fente (14, 26) ; et enfin
- une douille de ressort à déformation élastique (15, 22) qui est introduite parallèlement à l'axe dans le logement (13, 23) de telle sorte qu'elle frappe le flanc (9) situé en opposition du bloc de palier (6) ou du rail de guidage longitudinal (1) à travers la fente (14, 26).

2. Guide à glissière linéaire selon la revendication 1, **caractérisé en ce que** le logement (13, 23) est réalisé dans une forme légèrement ovale dans la section, le semi-arbre long (16) ayant une dimension plus grande et le semi-arbre court (17) ayant une dimension plus petite que le diamètre extérieur (18) de la douille de ressort (15, 22).

3. Guide à glissière linéaire selon l'une quelconque des revendications 1 ou 2, **caractérisé en ce que** la douille de ressort (15, 22) est introduite dans le logement (13, 23) sous une tension radiale.

4. Guide à glissière linéaire selon l'une quelconque des revendications précédentes, **caractérisé en ce que** le logement (13, 23) est agencé dans un montant (12) du bloc de palier (6) et est ouvert dans la direction de ses deux extrémités longitudinales.

5. Guide à glissière linéaire selon la revendication 4, **caractérisé en ce que** l'épaisseur (17) ou la largeur (28) du montant (12) correspond à la longueur de la douille de ressort (15 ou 22).

6. Guide à glissière linéaire selon l'une quelconque des revendications précédentes, **caractérisé en ce que** le logement (23) est ouvert latéralement avec sa section intérieure en direction de flancs opposés l'un à l'autre (10.2, 10.3) du bloc de palier (6) par le biais de deux fentes situées en opposition (26), la douille de ressort (22) frappant les deux flancs de guidage respectifs (10.2, 10.3) du rail de guidage longitudinal (1).

7. Guide à glissière linéaire selon l'une quelconque des revendications précédentes, **caractérisé en ce qu'**une pluralité de logements (13, 23) et de douilles de ressort (15, 22) introduites dans ceux-ci sont agencés sur un bloc de palier (6) avec leurs axes longitudinaux à chaque fois perpendiculaires à la direction de la glissière (S) et dans deux directions d'orientation différentes perpendiculaires l'une à l'autre (24, 25).

8. Guide à glissière linéaire selon l'une quelconque des revendications précédentes, **caractérisé en ce que** les flancs (9) du rail de guidage longitudinal (1) ou du bloc de palier (6) frappés par la douille de ressort (15) sont munis d'au moins un enfoncement à encoches (19) pour l'engagement de la douille de ressort (15).

9. Guide à glissière selon la revendication 8, **caractérisé en ce qu'**une pluralité d'enfoncements à encoches (19) sont prévus à des écartements d'encoches de préférence uniformes (21).

10. Guide à glissière linéaire selon l'une quelconque des revendications précédentes, **caractérisé en ce que** la douille de ressort est réalisée dans un matériau plein élastique en tant que tambour à ressort.

11. Chaise de bureau avec deux composants pouvant coulisser de façon linéaire l'un par rapport à l'autre, un guide à glissière linéaire selon l'une quelconque des revendications précédentes étant prévu entre les deux composants.
